# EUROPEAN PATENT SPECIFICATION

(11) **EP 3 327 825 B1**
(45) Date of publication and mention of the grant of the patent: **02.10.2019**
(21) Application number: 16200647.2
(22) Date of filing: 25.11.2016
(51) Int. Cl.: H01M 2/20, H01M 2/34, H01M 10/42, H01R 13/70, H01R 11/28

(54) **BUSBAR FOR A BATTERY SYSTEM**
STROMSCHIENE FÜR EIN BATTERIESYSTEM
BARRE OMNIBUS POUR SYSTÈME DE BATTERIE

(43) Date of publication of application: 30.05.2018
(73) Proprietor: Samsung SDI Co., Ltd., Giheung-gu Yongin-si, Gyeonggi-do 17084 (KR)
(72) Inventor: HOFER, Maximilian, 8230 Hartberg (AT); SCHMIEDHOFER, Christoph, 8020 Graz (AT)
(74) Representative: Gulde & Partner

(56) References cited:
- EP-A1- 2 533 424
- WO-A1-2015/111450
- US-A- 6 100 745
- US-A1- 2012 286 578
- US-A1- 2014 354 232

## Description

### Field of the Invention

The present invention relates to a busbar for a battery system. The present invention is further related to a battery system comprising such a busbar.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is housed. In modular designs, pluralities of battery cells are connected to form submodules and several submodules are connected to form the module. The battery management functions can then be at least partially realized on either module or submodule level and thus interchangeability might be improved. One or more battery modules are mechanically and electrically integrated, equipped with a thermal management system and set up for communication with one or more electrical consumers in order to form a battery system.

To provide voltage level control of the power interface of a battery system, a protection system is required to enable a fast and reliable safety shutdown of the power interface in the case of non-permissible operating conditions. The protection system may be adapted to shutdown the electrical connection between one of the electrodes of the electrode assembly and the battery module of the battery system as soon as a current overload is detected by a control system of the battery system. A typical protection system comprises an electro-mechanical switch and a driving circuit, e.g. a relay with a corresponding relay circuit. The electromechanical switch can be combined with a fuse to enhance the functionality of the protection system. Typically, the fuse is serially connected to electromechanical switch. The fuse may melt during a constant overload to backup the safety shutdown.

A protection system based on an electromechanical switch and a fuse has several disadvantages and requires additional efforts during the production of a battery system. The electronic components incur additional purchasing and integration costs. Additional amount of space in the battery system is required as the individual components including the corresponding driving circuit must be embedded in the housing of the battery system. A relay-based electromechanical switch consumes always current when the relay is switched on which causes continuous power consumption. The mechanical parts of a relay are failure-prone and provide only a limited lifetime, i.e. the number of switching cycles of a relay is limited. Furthermore, the mechanical switching times are limited due to the inertia.

There are certain efforts to use power MOSFETs (Metal Oxide Semiconductor Field Effect Transistors) for solid state switches on a PCB of a battery system. However, due to the high currents and resistances of the whole switch, the power dissipation is a problem for using this kind of MOSFET-based solid state switches.

Busbars are typically used for electrical interconnections inside a battery system. They can be made of a material with high electrical conductivity. Busbars often have a stripe-like shape with a large surface area. The large surface area reduces the discharge characteristics of the interconnector and enables to carry substantial electric currents. Usually they are passive components which can be fitted in even very small and cramped installation spaces. Nevertheless, busbars require space inside a battery module and integration with other electrical components may be beneficial. In particular, a solid state switch integrated in a busbar may help to save installation space and could be a possible solution for the power dissipation problem of FET-based solid state switches of the prior art. WO 2015/111450 A1 discloses a switching substrate comprising a control circuit board in contact to multiple busbars.

It is thus an object of the present invention to overcome or reduce at least some of the drawbacks of the prior art and to provide a busbar with an integrated solid state switch which is cheap, compact and robust, has low power dissipation and allows fast switching times. Furthermore, a corresponding battery module comprising such a busbar is to provide.

### Summary of Invention

One or more of the drawbacks of the prior art could be avoided or at least reduced by means of the present invention. In particular, a busbar for a battery system is provided, comprising a first bar element and a second bar element spaced apart, a third bar element connecting the first bar element and the second bar element to form a common bar, a first terminal arranged in the first bar element, and a second terminal arranged in the second bar element, wherein the busbar further comprises a solid state switch the solid state switch being adapted to electrically interconnect the first terminal and the second terminal, wherein the solid state switch comprises a plurality of FETs, and wherein the solid state switch is structurally and electrically integrated into the busbar, wherein the FET includes a drain contact located on a first surface of the FET, and source and gate contacts located on a second surface of the FET opposite to the first surface, wherein the first surface of the FET is directly coupled to one of the first and second bar elements so that the drain contact of the FET is electrically connected to the one of the first and second bar elements, and wherein the second surface of the FET is directly coupled to the third bar element so that the source and gate contacts of the FET are electrically connected to the third bar element.

In other words, a busbar for the electrical interconnection of different components of a battery system is provided which has a solid state switch structurally and electrically integrated. The integrated solid state switch is adapted to switch an electrically conductive connection between the first terminal and the second terminal, wherein the first terminal is arranged in the first bar element and the second terminal is arranged in the second bar element. Preferably, the solid state switch is adapted to digitally switch between an ON-state and an OFF-state, wherein in the ON-state the first terminal and the second terminal of the busbar are electrically conductively connected and in the OFF-state the first terminal and the second terminal are electrically isolated from one another. Preferably, the battery system is a 48 V battery system.

The busbar comprises at least three bar elements, i.e. the first bar element, the second bar element and the third bar element, wherein the third bar element connects the first bar element and the second bar element to form a common bar. Preferably, the connection between these bar elements is a permanently fixed connection. Alternatively, the elements can be detachably connected. The connection itself is preferably a contact connection. The quality of the connection can be enhanced by an electrically conductive contact agent. The contact agent can be, for example, a bonding agent (glue, adhesive, metallic solder or the like) and/or an agent to enhance the thermal conductivity of the connection.

Preferably, the busbar has a strip-like shape with a uniform busbar width and a uniform busbar height. However, the shape of the busbar may be freely adapted to meet individual requirements of a specific battery design, e.g. in view of a limited installation space. In particular, the busbar can be in the form of straight, bend or arbitrary curved belts, bands, ribbons, ribs or rails.

The terminals are to connect the busbar to an external circuit, wire or electrical component. Preferably, the first terminal and the second terminal provide one or more ring terminals for electrically connecting the busbar to appropriate counter-terminals in a battery system.

Preferably, the first bar element and the second bar element are aluminium carriers (or carriers made from another electrically conductive material) with rectangular shape. The carriers can be thinned on one side to at least partly accommodate elements of the solid state switch, wherein the terminals are arranged outside said thinned regions.

Preferably, the first terminal of the busbar is connectable to a first or second terminal of a first battery cell. Furthermore preferred, the second terminal of the busbar is connectable to a first or second terminal of a second battery cell.

A solid state switch (SSS), e.g. a solid state relay (SSR) or a solid state contactor (SSC), is a microelectronic device based on semiconductor technology. In contrast to conventional electro-mechanical switching technologies (i.e. conventional relays), solid state switches require no moving parts and allow absolutely quite operations. Due to their higher shock and vibration resistance they are ideal for application in harsh environments and allow ultrafast switching times (response to control signals in less that 100 µs). However, other kinds of SSS may also be applied into the busbar. For example, SSSs based on micro-electro-mechanical systems (MEMS) or micro-electro-opto-mechanical systems (MOEMS) can be integrated into the busbar.

The SSS comprises at least one field-effect transistor (FET). A FET is a microelectronic transistor that uses an electric field, which is applied between a gate contact and a source contact of the device, to control the electrical conductivity between the drain contact and the source contacts of the device. For a SSS, different kinds of FETs can be used. Preferably, a FET is a metal-oxide-semiconductor field-effect transistor (MOSFET).

The FET is a rear surface contact MOSFET, wherein the drain contact is located on the rear surface of the device and wherein the gate and the source contacts of the device are located on the top surface. All contact regions of the FET may be adapted to be electrically connected by physically contacting external contacts, by soldering, electrically conductive gluing, or by wiring (e.g. via wire bonds). Preferably, the MOSFET is a NVD6416ANL n-channel power MOSFET. Preferably, a SSS is defined by individual switching devices or switching elements (e.g. a FET) and the specific wiring scheme for connecting these devices.

The solid state switch is electrically integrated into the busbar, which means that the electrical interconnection between the first terminal and the second terminal is controlled by the solid state switch in a direct fashion without the need of an external wiring or additional connections. The solid state switch is in direct contact with the first, the second and the third bar element. The quality of the connection can be enhanced by an electrically conductive contact agent. The contact agent can be, for example, a bonding agent (glue, adhesive, metallic solder or the like) and/or an agent to enhance the thermal conductivity of the connection.

The solid state switch is structurally integrated into the busbar, which means that the mechanical connection between the solid state switch and the rest of the busbar results in a common element, which is at least in the outer shape and form comparable to a conventional busbar. In these concerns, the term structurally integrated means that the solid state switch is fully incorporated into the corpus of the busbar. The invented busbar includes or houses the solid state switch. Furthermore preferred, the busbar has a plain-shaped surface. Moreover preferred, the busbar only comprises substantially plain-shaped surfaces.

The invention is based on the finding that the incorporation of a solid state switch into a busbar offers many advantages over conventional battery system designs. The busbar provides a means to connect different parts of a battery system and a means for switching at the same time. Installation space can be saved due to the small footprint of solid state switches. External circuit boards carrying a relay as well as additional wiring and assembling steps during the installation of such circuit boards inside a battery system can be avoided. As compared to conventional electro-mechanical switches (e.g. relays), solid state switches do not require any moving mechanical parts which typically decrease the lifetime and durability of such switching devices. As compared to MOSFET-based solid state switches for battery systems of the state of art, the problem of power dissipation can be avoided. As the solid state switch is in thermal contact with the other elements of the busbar, they can be used as integrated heatsinks for the solid state switch. In particular, the large surface area of the first and second bar elements may even allow the conduction of high electrical and thermal currents through the solid state switch. Furthermore, precharging of a battery system can be executed with a solid state switch without any additional components.

Preferably, a control circuit for the solid state switch is integrated on a plastic circuit board (PCB) of a battery control system for a battery system. However, the control circuit can also be on another PCB or it may be integrated inside a battery system in another way (e.g. on a general circuit board (CB) or on an additional electronic module).

In a first embodiment, the solid state switch comprises a first FET and a second FET which are antiserially interconnected, wherein the gate contacts of the FETs are electrically interconnected, the source contacts of the FETs are electrically interconnected, the drain contact of the first FET is electrically connected to the first terminal, and the drain contact of the second FET is electrically connected to the second terminal. In this configuration, both FETs can be controlled at once by applying a gate voltage to the gates of the FETs.

In a second embodiment, the solid state switch comprises two sets of antiserially interconnected FETs, each set comprising a first FET and a second FET, wherein the gate contacts of the FETs are electrically interconnected, the source contacts of the FETs are electrically interconnected, the drain contacts of the first FETs are electrically connected to the first terminal, and the drain contacts of the second FETs are electrically connected to the second terminal. This configuration is a parallel connection of two solid state switches corresponding to the first embodiment. Thus, the four source contacts of the FETs are electrically interconnected, the four gate contacts of the FETs are electrically interconnected, two drain contacts are electrically connected to the first terminal of the busbar, and two drain contacts are electrically connected to the second terminal of the busbar.

In an alternative third embodiment, the solid state switch comprises three or more sets of antiserially interconnected FETs, each set comprising a first FET and a second FET, wherein the gate contacts of the FETs are electrically interconnected, the source contacts of the FETs are electrically interconnected, the drain contacts of the first FETs are electrically connected to the first terminal, and the drain contacts of the second FETs are electrically connected to the second terminal. In other preferred embodiments, however, only the source contacts of the FETs of a set are electrically interconnected.

The interconnection between the various drain, source and gate contacts of the FETs can be provided by electrical conductor tracks or contact elements also integrated into the busbar. Preferably, the interconnections are provided by electrically structuring the third bar element thus that electrical conductor tracks or isolated contact elements are formed within the third bar element. If rear surface contact MOSFETs with gate and source contacts on the top surface are used, it is preferred that the drain contacts of the MOSFETs are electrically connected to a corresponding terminal by an electrically conductive first or second bar element which is in contact with the drain contacts of the corresponding MOSFETs. The gate and source contacts on the top surface of said MOSFETs can be connected via a third bar element with structured electrical conduction capabilities. The third bar element can be adapted to provide a first kind of contact pad for contacting to FETs on its rear side and a second kind of contact pads on its top side to enable connections from the source and gate contacts of the FETs to an external control circuit.

Furthermore preferred, the third bar element comprises an electrically conductive first contact element adapted to electrically interconnect the source contacts of the FETs, and an electrically conductive second contact element electrically isolated from the first electrically conductive contact element, adapted to electrically interconnect the gate contacts of the FETs. The first contact element and the second contact element may also enable electrical connections from the source and gate contacts of the FETs to an external control circuit or the third bar element may comprise additional contact regions to enable such external connections. The additional contact regions can be internally connected to the interconnected gate contacts and the interconnected source contacts of contacted FETs, e.g. via isolated electrically conductive conductor tracks.

Alternatively, the third bar element can comprise an electrically non-conductive carrier and a conduction track layout suitable to interconnect the gate contacts and to interconnect the source contacts of contacted FETs. Furthermore, the third bar element can comprise additional contact regions to enable a connection of the source and gate contacts of the FETs to an external control circuit. The additional contact regions can be internally connected to the interconnected gate contacts and the interconnected source contacts of contacted FETs, e.g. via electrically conductive through holes in the carrier or via isolated electrically conductive islands arranged on the carrier.

Preferably, the third bar element comprises a means for isolation, adapted to electrically isolate the first contact element from the second contact. The means for isolation can be made of an electrically non-conductive material (e.g. plastics or rubber). The means for isolation may be further adapted to provide a frame in which possible further individual components of the third bar element as well as the electrical components of the integrated solid state switch can be placed and hold.

Preferably, the means for isolation is arranged between the first bar element and the first contact element and between the second bar element and the first contact element. Preferably, the means for isolation is adapted to electrically isolate the first bar element and the second bar element from one another.

Preferably, the means for isolation is a structured element that provides a mechanically stable structure with protrusions and holes which allows to place at least one FET on a predefined position on the first bar element and/or on the second bar element, wherein the structured means for isolation electrically isolates different parts of the busbar at the same time.

Preferably, the third bar element comprises a first contact, a second contact element and a means for isolation. The third bar element can be a segmented bar element comprising individual sub-elements. In particular, the third bar element can comprise a first sub-element carrying or providing the first contact, and a second sub-element carrying or providing the second contact. The first sub-element and the second sub-element may be electrically isolated from one another and hold together by a means for isolation (as third sub-element) in the form of a holding frame. Preferably, the first sub-element has a strip-like shape with an inner aperture and the second sub-element has a complete strip-like shape, wherein the second sub-element is arranged inside the inner aperture of the first sub-element. Preferably, the first contact element has a rectangular shape with an inner aperture and the second contact element has a complete rectangular shape, wherein the second contact element is arranged inside the inner aperture of the first contact.

According to another aspect of the present invention, a battery module including a busbar as defined above is provided, comprising a first battery terminal and a second battery terminal spaced apart and electrically isolated from one another, wherein the busbar is adapted to electrically connect the first battery terminal and the first terminal of the busbar, wherein the busbar is adapted to electrically connect the second battery terminal and the second terminal of the busbar, wherein the solid state switch being adapted to electrically interconnect the first battery terminal section and the second battery terminal section upon an actuation of the solid state switch.

Preferably, the first battery terminal and/or the second battery terminal is a terminal of a battery cell. Preferably, the first terminal of the busbar is connectable to a first or second terminal of a first battery cell. Furthermore preferred, the second terminal of the busbar is connectable to a first or second terminal of a second battery cell.

According to yet another aspect of the present invention, a vehicle including a busbar as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates an exemplary schematic perspective view of a busbar according to the present invention installed in a battery system;
- Fig. 2: illustrates a schematic perspective view of a busbar according to an embodiment;
- Fig. 3: illustrates an exploded view of a busbar according to an embodiment;
- Figs. 4a, 4b: illustrate sectional views of the inner structure of a busbar according to an embodiment;
- Fig. 5: illustrates a circuit for a solid state switch according to an embodiment;
- Fig. 6: illustrates a comparison of the power dissipation of switches for conventional relays and a solid state switch according to an embodiment; and
- Fig. 7: illustrates a schematic perspective view of a battery module according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g. rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

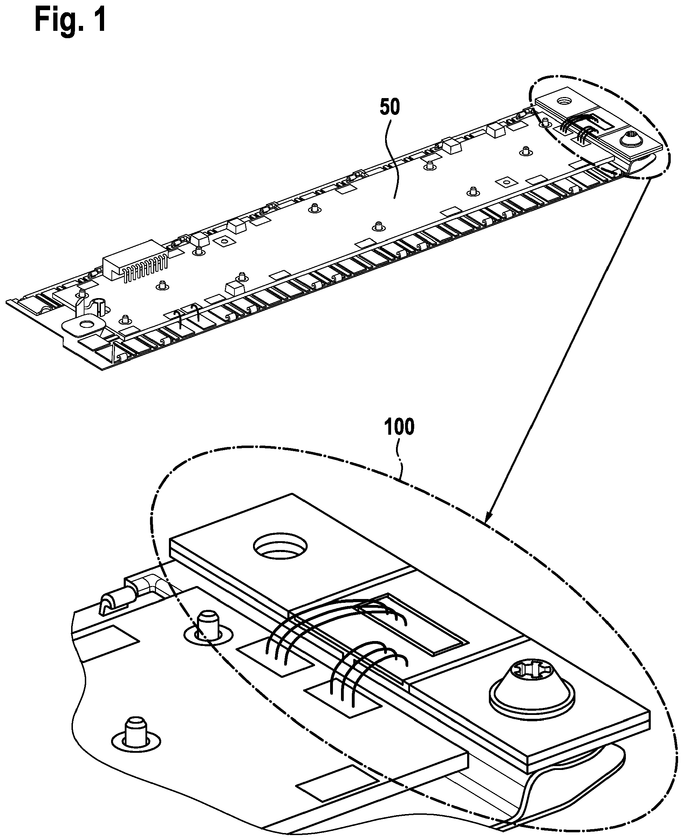

Fig. 1 is an exemplary schematic perspective view of a busbar 100 according to the present invention installed in a battery system. The busbar 100 is illustrated as part of said battery system. The busbar may be at least partly arranged on a PCB 50 which may also comprise a control circuit for the busbar 100.

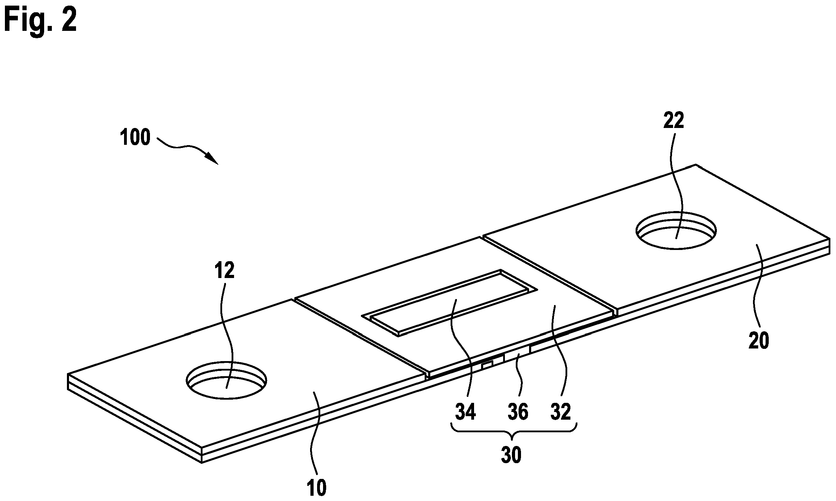

Fig. 2 is a schematic perspective view of a busbar 100 according to an embodiment. The busbar 100 comprises a first bar element 10 and a second bar element 20 spaced apart, a third bar element 30 connecting the first bar element 10 and the second bar element 20 to form a common bar, a first terminal 12 arranged in the first bar element 10, and a second terminal 22 arranged in the second bar element 20. The first terminal 12 and the second terminal 22 are depicted as through holes for the electrical connection with a further component, arranged inside the first bar element 10 and the second bar element 20, respectively. However, the first terminal 12 and the second terminal 22 are not limited to such an embodiment. The first terminal 12 and the second terminal 22 can only be adapted to allow a kind of electrical connection to connect the busbar 100 to external components. For example, first terminal 12 and the second terminal 22 can be soldering pads or other kinds of contact areas. The third bar element 30 comprises a first contact element 32, a second contact element 34 and a means for isolation 36. The means for isolation 36 is adapted to electrically isolate the first contact element 32 from the second contact element 34. Furthermore, the means for isolation 36 is adapted to electrically isolate the first bar element 10 from the second bar element 20. Preferably, the first contact element 32 and the second contact element 34 are electrically conductive metallic elements which allow establishing an electrically conductive connection to other electrical components on all their surfaces.

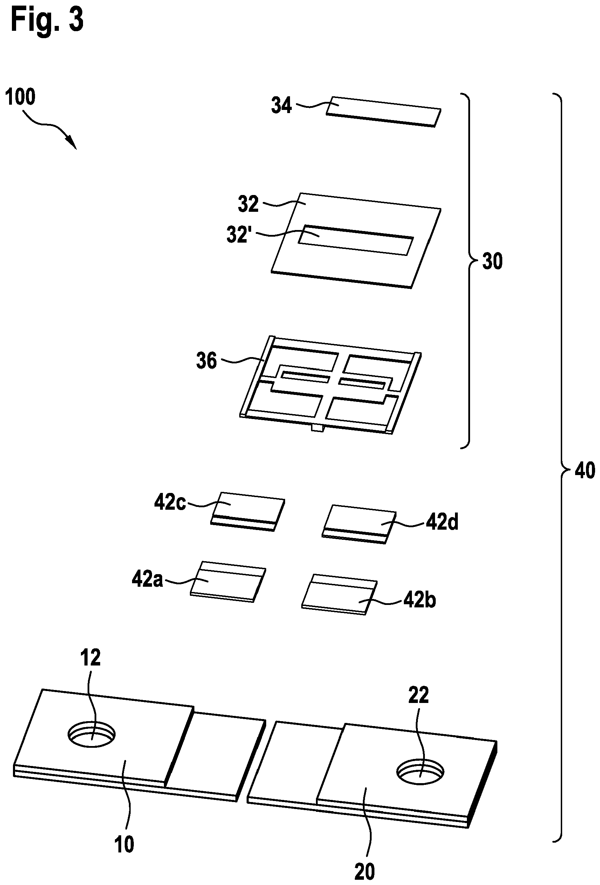

Fig. 3 is an exploded view of a busbar 100 according to an embodiment. The depicted busbar 100 shows a layered internal structure, wherein a first bar element 10 including a first terminal 12 and a second bar element 20 including a second terminal 22 are carriers for the overlaying elements. The first bar element 10 and the second bar element 20 are each contacting two FETs 42a, 42b, 42c, 42d. The FETs 42a, 42b, 42c, 42d are rear surface contacted power MOSFETs with their corresponding drain contacts facing towards the first bar element 10 and the second bar element 20, and with the source and gate contacts facing in the opposite direction. Above the FETs, the third bar element 30 is arranged, wherein the third bar element 30 comprises a first contact element 32, a second contact element 34 and a means for isolation 36.

The first contact element 32 has a rectangular shape with an inner aperture 32' and the second contact element 34 has a complete rectangular shape, wherein the second contact element 34 can be arranged inside the inner aperture 32' of the first contact element 32. The means for isolation 36 is adapted to electrically isolate the first contact element 32 from the second contact element 34 and to electrically isolate the first bar element 10 from the second bar element 20. Furthermore, the means for isolation 36 may be adapted to provide a frame for the spatial positioning of the individual FETs 42a, 42b, 42c, 42d and for isolating the FETs 42a, 42b, 42c, 42d to one another to avoid direct contacts between them. However, the means for isolation 36 may allow the first contact element 32 and the second contact element 34 to electrically interconnect related contacts of the FETs 42a, 42b, 42c, 42d to integrate the function of a solid state switch 40 into the busbar 100. In particular, the second contact element 34 may interconnect all gate contacts of all FETs 42a, 42b, 42c, 42d to one another whereas first contact element 32 may interconnect all source contacts of all FETs 42a, 42b, 42c, 42d to one another. Preferably, the first contact element 32 and the second contact element 34 are electrically conductive metallic elements which allow establishing an electrically conductive connection to electrical components on all their surfaces.

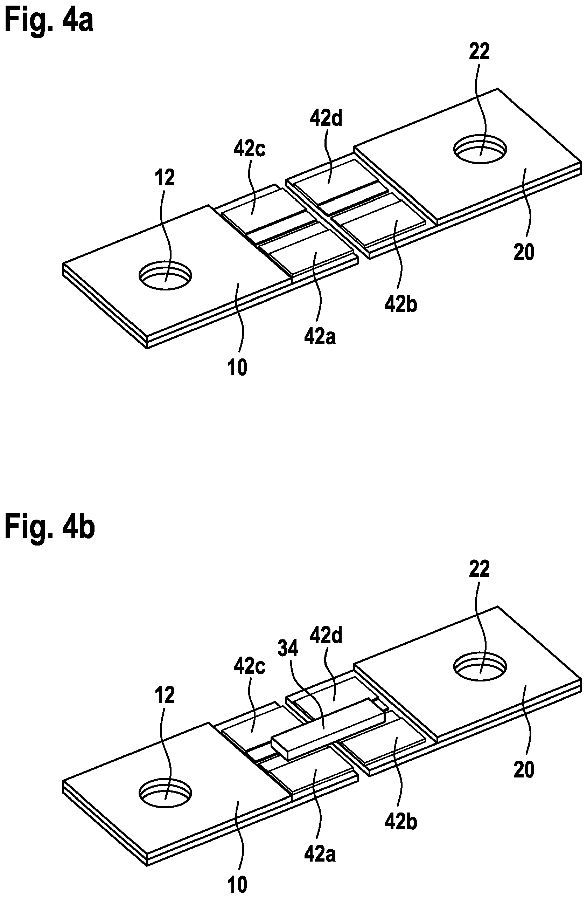

Figures 4a and 4b include sectional views of the inner structure of a busbar 100 according to an embodiment. In Fig. 4a four FETs 42a, 42b, 42c, 42d are arranged on top of a first bar element 10 and a second bar element 20, wherein a first set of two FETs 42a, 42c is arranged on top of the first bar element 10 including a first terminal 12 and wherein a second set of two FETs 42b, 42d is arranged on top of the second bar element 20 including a second terminal 20. In Fig. 4b the same configuration for arranging two sets of two FETs 42a, 42b, 42c, 42d on a first bar element 10 and a second bar element 20 is shown. However, a second contact element 34 is depicted which may interconnect all drain contacts of all FETs 42a, 42b, 42c, 42d to one another.

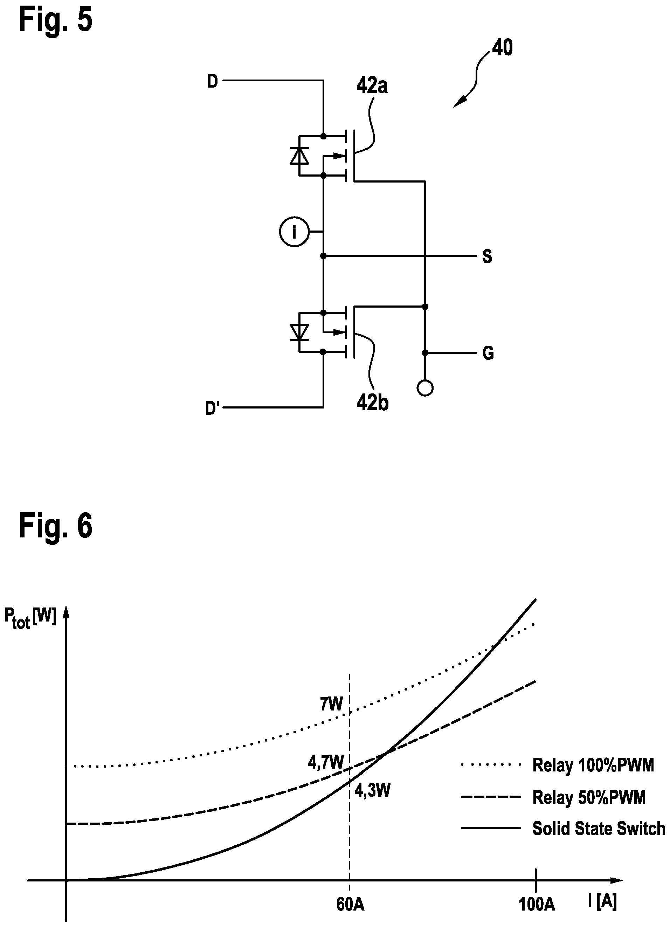

Fig. 5 is a circuit for a solid state 40 switch according to an embodiment. The circuit comprises a first FET 42a and a second FET 42b which are antiserially interconnected, wherein the gate contacts G of the FETs 42a, 42b are electrically interconnected, the source contacts S of the FETs 42a, 42b are electrically interconnected, the drain contact D of the first FET 42a spaced apart from the drain contact D' of the second FET 42b. Preferably, the FETs 42a, 42b are NVD6416ANL n-channel Power MOSFETs.

Fig. 6 is a comparison of the power dissipation of switches for conventional relays and a solid state switch according to an embodiment. Three different approaches are compared: relay 100% (650 µΩ, 400 mA, 12V), relay 50% (650 µΩ, 200 mA, 12V), and solid state switch (4 FETs with 1,2 µΩ, in total 1,2 µΩ). In the current range below 60 A (typical rms current consumption), the solid state switch has the lowest power dissipation: relay 100% 7 W, relay 50% 4,7 W, and solid state switch 4,3 W.

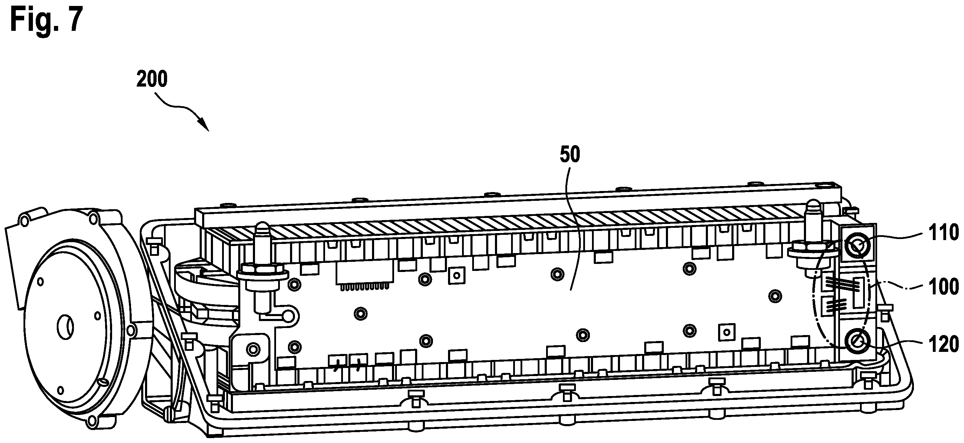

Fig. 7 is a schematic perspective view of a battery module 200 according to an embodiment. The battery module 200 comprises a PCB 50 in electrical connection to a busbar 100 of the present invention. The figure shows a first battery terminal 110 and a second battery terminal 120 which are spaced apart and electrically isolated from one another. Preferably, the busbar 100 is adapted to electrically connect the first battery terminal 110 to the first terminal 12 of the busbar 100 and to electrically connect the second battery terminal 120 to the second terminal 22 of the busbar 100.

## Claims

1. A busbar (100) for a battery system, comprising:
- a first bar element (10) and a second bar element (20) spaced apart,
- a third bar element (30) connecting the first bar element (10) and the second bar element (20) to form a common bar,
- a first terminal (12) arranged in the first bar element (10), and
- a second terminal (22) arranged in the second bar element (20),
the busbar (100) further comprises a solid state switch (40), the solid state switch (40) being adapted to electrically interconnect the first terminal (12) and the second terminal (22),
wherein the solid state switch (40) comprises a plurality of FETs (42a, 42b), **characterized in that**
the solid state switch (40) is structurally and electrically integrated into the busbar (100),
wherein
the FET (42a, 42b) includes a drain contact located on a rear first- surface of the FET (42a, 42b), and source and gate contacts located on a top surface of the FET (42a, 42b) opposite to the first surface,
wherein the rear surface of the FET (42a, 42b) is directly coupled to one of the first and second bar elements (10, 20) so that the drain contact of the FET (42a, 42b) is electrically connected to the one of the first and second bar elements (10, 20), and
wherein the top surface of the FET (42a, 42b) is directly coupled to the third bar element (30) so that the source and gate contacts of the FET (42a, 42b) are electrically connected to the third bar element (30).

2. The busbar (100) according to claim 1, wherein the solid state switch (40) comprises a first FET (42a) and a second FET (42b) which are antiserially interconnected, wherein the gate contacts of the FETs (42a, 42b) are electrically interconnected, the source contacts of the FETs (42a, 42b) are electrically interconnected, the drain contact of the first FET (42a) is electrically connected to the first terminal (12), and the drain contact of the second FET (42b) is electrically connected to the second terminal (22).

3. The busbar (100) according to claim1, wherein the solid state switch (40) comprises two sets of antiserially interconnected FETs (42a, 42b, 42c, 42d), each set comprising a first FET (42a, 42c) and a second FET (42b, 42d), wherein the gate contacts of the FETs (42a, 42b, 42c, 42d) are electrically interconnected, the source contacts of the FETs (42a, 42b, 42c, 42d) are electrically interconnected, the drain contacts of the first FETs (42a, 42c) are electrically connected to the first terminal (12), and the drain contacts of the second FETs (42b, 42d) are electrically connected to the second terminal (22).

4. The busbar (100) according to claim 1 or 4, wherein the third bar element (30) comprises an electrically conductive first contact element (32) adapted to electrically interconnect the source contacts of the FETs (42), and an electrically conductive second contact element (34) electrically isolated from the first contact element (32).

5. The busbar (100) according to claim 4, wherein the third bar element (30) further comprises a means for isolation (36), adapted to electrically isolate the first contact element (32) from the second contact element (34).

6. The busbar (100) according to claim 5, wherein the means for isolation (36) is arranged between the first bar element (10) and the first contact element (32) and between the second bar element (20) and the first contact element (32), the means for isolation (36) adapted to electrically isolate the first bar element (10) and the second bar element (20) from one another.

7. The busbar (100) according to claim 5 or 6, wherein the means for isolation (36) is further adapted to electrically isolate the FETs (42) from one another.

8. The busbar (100) according to one of the preceding claims, wherein the first bar element (10) and the second bar element (20) are aluminium carriers.

9. The busbar (100) according to one of the preceding claims, wherein the busbar (100) has a strip-like shape with a uniform busbar width and a uniform busbar height.

10. The busbar (100) according to one of the claims 4 to 7, wherein the first contact element (32) has a rectangular shape with an inner aperture (32') and the second contact element (34) has a rectangular shape, wherein the second contact element (34) is arranged inside the inner aperture (32') of the first contact element (32).

11. The busbar (100) according to one of the preceding claims, wherein a control circuit for the solid state switch (40) is integrated on a PCB (50) of a battery control system.

12. A battery module (200) including a busbar (100) according to one of the preceding claims, comprising
- a first battery terminal (110) and a second battery terminal (120) spaced apart and electrically isolated from one another,
- wherein the busbar (100) is adapted to electrically connect the first battery terminal (110) and the first terminal (12) of the busbar (100),
- wherein the busbar (100) is adapted to electrically connect the second battery terminal (120) and the second terminal (22) of the busbar (100),
- wherein the solid state switch (40) being adapted to electrically interconnect the first battery terminal section (110) and the second battery terminal section (120) upon an actuation of the solid state switch (40).

13. The battery module (200) according to claim 12, wherein the first battery terminal (110) and/or the second battery terminal (120) is a terminal of a battery cell.

14. A vehicle including a busbar (100) according to one of the claims 1 to 11.

## Patentansprüche

1. Stromschiene (100) für ein Batteriesystem, die Folgendes umfasst:
- ein erstes Schienenelement (10) und ein zweites Schienenelement (20), die beabstandet sind,
- ein drittes Schienenelement (30), das das erste Schienenelement (10) und das zweite Schienenelement (20) verbindet, um eine gemeinsame Schiene zu bilden,
- einen ersten Anschluss (12), der in dem ersten Schienenelement (10) angeordnet ist, und
- einem zweiten Anschluss (22), welcher in dem zweiten Schienenelement (20) angeordnet ist,
wobei die Stromschiene (100) ferner einen Halbleiterschalter (40) umfasst, wobei der Halbleiterschalter (40) angepasst ist, um den ersten Anschluss (12) und den zweiten Anschluss (22) elektrisch zu verschalten,
wobei der Halbleiterschalter (40) eine Vielzahl von FETs (42a, 42b) umfasst,
**dadurch gekennzeichnet, dass** der Halbleiterschalter (40) strukturgemäß und elektrisch in die Stromschiene (100) integriert ist,
wobei der FET (42a, 42b) einen Drain-Kontakt aufweist, der sich auf einer Rückseitenoberfläche des FET (42a, 42b) befindet, und einen Source- und einen Gate-Kontakt, die sich auf einer oberen Oberfläche des FET (42a, 42b), der ersten Oberfläche entgegensetzt, befinden,
wobei die Rückseitenoberfläche des FET (42a, 42b) direkt mit einem des ersten und zweiten Schienenelements (10, 20) derart gekoppelt ist, dass der Drain-Kontakt des FET (42a, 42b) elektrisch mit dem einen des ersten und zweiten Schienenelements (10, 20) gekoppelt ist, und
wobei die obere Oberfläche des FET (42a, 42b) direkt mit dem dritten Schienenelement (30) derart gekoppelt ist, dass der Source- und der Gate-Kontakt des FET (42a, 42b) elektrisch mit dem dritten Schienenelement (30) verbunden sind.

2. Stromschiene (100) nach Anspruch 1, wobei der Halbleiterschalter (40) einen ersten FET (42a) und einen zweiten FET (42b) umfasst, die antiseriell verschaltet sind, wobei die Gate-Kontakte der FETs (42a, 42b) elektrisch verschaltet sind, die Source-Kontakte der FETs (42a, 42b) elektrisch verschaltet sind, der Drain-Kontakt des ersten FET (42a) elektrisch mit dem ersten Anschluss (12) verbunden ist, und der Drain-Kontakt des zweiten FET (42b) elektrisch mit dem zweiten Anschluss (22) verbunden ist.

3. Stromschiene (100) nach Anspruch 1, wobei der Halbleiterschalter (40) zwei Sätze antiseriell verschalteter FETs (42a, 42b, 42c, 42d) umfasst, wobei jeder Satz einen ersten FET (42a, 42c) und einen zweiten FET (42b, 42d) umfasst, wobei die Gate-Kontakte der FETs (42a, 42b, 42c, 42d) elektrisch verschaltet sind, die Source-Kontakte der FETs (42a, 42b, 42c, 42d) elektrisch verschaltet sind, die Drain-Kontakte der ersten FET (42a, 42b) elektrisch mit dem ersten Anschluss (12) verbunden sind, und die Drain-Kontakte der zweiten FETs (42b, 42d) elektrisch mit dem zweiten Anschluss (22) verbunden sind.

4. Stromschiene (100) nach Anspruch 1 oder 4, wobei das dritte Schienenelement (30) ein elektrisch leitendes erstes Kontaktelement (32) umfasst, das angepasst ist, um die Source-Kontakte der FETs (42) elektrisch zu verbinden, und ein elektrisch leitendes zweites Kontaktelement (34), das von dem ersten Kontaktelement (32) elektrisch isoliert ist.

5. Stromschiene (100) nach Anspruch 4, wobei das dritte Schienenelement (30) ferner ein Isoliermittel (36) umfasst, das angepasst ist, um das erste Kontaktelement (32) von dem zweiten Kontaktelement (34) elektrisch zu isolieren.

6. Stromschiene (100) nach Anspruch 5, wobei das Isoliermittel (36) zwischen dem ersten Schienenelement (10) und dem ersten Kontaktelement (32) und zwischen den zweiten Schienenelement (20) und dem ersten Kontaktelement (32) eingerichtet ist, wobei das Isoliermittel (36) angepasst ist, um das erste Schienenelement (10) und das zweite Schienenelement (20) voneinander elektrisch zu isolieren.

7. Stromschiene (100) nach Anspruch 5 oder 6, wobei das Isoliermittel (36) ferner angepasst ist, um die FETs (42) voneinander elektrisch zu isolieren.

8. Stromschiene (100) nach einem der vorstehenden Ansprüche, wobei das erste Schienenelement (10) und das zweite Schienenelement (20) Aluminiumträger sind.

9. Stromschiene (100) nach einem der vorstehenden Ansprüche, wobei die Stromschiene (100) eine streifenähnliche Form mit einer gleichförmigen Stromschienenbreite und einer gleichförmigen Stromschienenhöhe aufweist.

10. Stromschiene (100) nach einem der Ansprüche 4 bis 7, wobei das erste Kontaktelement (32) eine rechteckige Form mit einer inneren Öffnung (32') aufweist, und das zweite Kontaktelement (34) eine rechteckige Form aufweist, wobei das zweite Kontaktelement (34) innerhalb der inneren Öffnung (32') des ersten Kontaktelements (32) eingerichtet ist.

11. Stromschiene (100) nach einem der vorstehenden Ansprüche, wobei eine Steuerschaltung für den Halbleiterschalter (40) auf einer PCB (50) eines Batteriesteuersystems integriert ist.

12. Batteriemodul (200), das eine Stromschiene (100) nach einem der vorstehenden Ansprüche aufweist, die Folgendes umfasst
- einen ersten Batterieanschluss (110) und einen zweiten Batterieanschluss (120) die beabstandet und voneinander elektrisch isoliert sind,
- wobei die Stromschiene (100) angepasst ist, um den ersten Batterieanschluss (110) und den ersten Anschluss (12) der Stromschiene (100) zu verbinden,
- wobei die Stromschiene (100) angepasst ist, um den zweiten Batterieanschluss (120) und den zweiten Anschluss (22) der Stromschiene (100) elektrisch zu verbinden,
- wobei der Halbleiterschalter (40) angepasst ist, um den ersten Batterieanschlussabschnitt (110) und den zweiten Batterieanschlussabschnitt (120) bei einer Betätigung des Halbleiterschalters (40) elektrisch zu verbinden.

13. Batteriemodul (200) nach Anspruch 12, wobei der erste Batterieanschluss (110) und/oder der zweite Batterieanschluss (120) ein Anschluss einer Batteriezelle ist.

14. Fahrzeug, das eine Stromschiene (100) nach einem der Ansprüche 1 bis 11 aufweist.

## Revendications

1. Barre omnibus (100) pour un système de batterie, comprenant :
- un premier élément de barre (10) et un deuxième élément de barre (20) espacés,
- un troisième élément de barre (30) raccordant le premier élément de barre (10) et le deuxième élément de barre (20) pour former une barre commune,
- une première borne (12) agencée dans le premier élément de barre (10), et
- une seconde borne (22) agencée dans le deuxième élément de barre (20),
la barre omnibus (100) comprenant en outre un commutateur à semi-conducteur (40), le commutateur à semi-conducteur (40) étant adapté pour interconnecter électriquement la première borne (12) et la seconde borne (22),
dans laquelle le commutateur à semi-conducteur (40) comprend une pluralité de FET (transistor à effet de champ) (42a, 42b),
**caractérisée en ce que** le commutateur à semi-conducteur (40) est intégré structurellement et électriquement dans la barre omnibus (100), dans laquelle :
le FET (42a, 42b) comprend un contact de drain positionné sur une surface arrière du FET (42a, 42b), et des contacts de source et de grille positionnés sur une surface supérieure du FET (42a, 42b) opposée à la première surface,
dans laquelle la surface arrière du FET (42a, 42b) est directement couplée à l'un des premier et deuxième éléments de barre (10, 20) de sorte que le contact de drain du FET (42a, 42b) est électriquement raccordé à l'un des premier et deuxième éléments de barre (10, 20), et
dans laquelle la surface supérieure du FET (42a, 42b) est directement couplée au troisième élément de barre (30) de sorte que les contacts de source et de grille du FET (42a, 42b) sont électriquement raccordés au troisième élément de barre (30).

2. Barre omnibus (100) selon la revendication 1, dans laquelle le commutateur à semi-conducteur (40) comprend un premier FET (42a) et un second FET (42b) qui sont interconnectés de façon antisérielle, où les contacts de grille des FET (42a, 42b) sont électriquement interconnectés, les contacts de source des FET (42a, 42b) sont électriquement interconnectés, le contact de drain du premier FET (42a) est électriquement raccordé à la première borne (12) et le contact de drain du second FET (42b) est électriquement raccordé à la seconde borne (22).

3. Barre omnibus (100) selon la revendication 1, dans laquelle le commutateur à semi-conducteur (40) comprend deux ensembles de FET (42a, 42b, 42c, 42d) raccordés de manière antisérielle, chaque ensemble comprenant un premier FET (42a, 42c) et un second FET (42b, 42d), où les contacts de grille des FET (42a, 42b, 42c, 42d) sont électriquement interconnectés, les contacts de source des FET (42a, 42b, 42c, 42d) sont électriquement interconnectés, les contacts de drain des premiers FET (42a, 42c) sont électriquement raccordés à la première borne (12), et les contacts de drain des seconds FET (42b, 42d) sont électriquement raccordés à la seconde borne (22).

4. Barre omnibus (100) selon la revendication 1 ou 4, dans laquelle le troisième élément de barre (30) comprend un premier élément de contact électriquement conducteur (32) adapté pour interconnecter électriquement les contacts de source des FET (42), et un second élément de contact électriquement conducteur (34) électriquement isolé du premier élément de contact (32).

5. Barre omnibus (100) selon la revendication 4, dans laquelle le troisième élément de barre (30) comprend en outre un moyen d'isolation (36), adapté pour isoler électriquement le premier élément de contact (32) du second élément de contact (34).

6. Barre omnibus (100) selon la revendication 5, dans laquelle le moyen d'isolation (36) est agencé entre le premier élément de barre (10) et le premier élément de contact (32) et entre le second élément de barre (20) et le premier élément de contact (32), le moyen d'isolation (36) étant adapté pour isoler électriquement le premier élément de barre (10) et le deuxième élément de barre (20) l'un de l'autre.

7. Barre omnibus (100) selon la revendication 5 ou 6, dans laquelle le moyen d'isolation (36) est en outre adapté pour isoler électriquement les FET (42) les uns des autres.

8. Barre omnibus (100) selon l'une des revendications précédentes, dans laquelle le premier élément de barre (10) et le deuxième élément de barre (20) sont des supports en aluminium.

9. Barre omnibus (100) selon l'une des revendications précédentes, où la barre omnibus (100) a une forme de bande avec une largeur de barre omnibus uniforme et une hauteur de barre omnibus uniforme.

10. Barre omnibus (100) selon l'une des revendications 4 à 7, dans laquelle le premier élément de contact (32) a une forme rectangulaire avec une ouverture interne (32') et le second élément de contact (34) a une forme rectangulaire, dans laquelle le second élément de contact (34) est agencé à l'intérieur de l'ouverture interne (32') du premier élément de contact (32).

11. Barre omnibus (100) selon l'une des revendications précédentes, dans laquelle un circuit de commande pour le commutateur à semi-conducteur (40) est intégré sur une PCB (50) d'un système de commande de batterie.

12. Module de batterie (200) comprenant une barre omnibus (100) selon l'une des revendications précédentes comprenant :
- une première borne de batterie (110) et une seconde borne de batterie (120) espacées et électriquement isolées l'une de l'autre,
- dans lequel la barre omnibus (100) est adaptée pour raccorder électriquement la première borne de batterie (110) et la première borne (12) de la barre omnibus (100),
- dans lequel la barre omnibus (100) est adaptée pour raccorder électriquement la seconde borne de batterie (120) et la seconde borne (22) de la barre omnibus (100),
- dans lequel le commutateur à semi-conducteur (40) est adapté pour interconnecter électriquement la première section de borne de batterie (110) et la seconde section de borne de batterie (120) suite à un actionnement du commutateur à semi-conducteur (40).

13. Module de batterie (200) selon la revendication 12, dans lequel la première borne de batterie (110) et/ou la seconde borne de batterie (120) est une borne d'un élément de batterie.

14. Véhicule comprenant une barre omnibus (100) selon l'une des revendications 1 à 11.
